# EUROPÄISCHE PATENTSCHRIFT

(11) **EP 2 479 869 B1**
(45) Veröffentlichungstag und Bekanntmachung des Hinweises auf die Patenterteilung: **27.03.2019**
(21) Anmeldenummer: 11008938.0
(22) Anmeldetag: 10.11.2011
(51) Int. Cl.: H02K 1/14, H02K 15/095, H02K 15/06, H02K 15/02

(54) **Fertigung eines Elektromotorenstators**
Production of an electric motor stator
Fabrication d'un stator de moteur électrique

(30) Priorität: 19.01.2011 DE 102011008816
(43) Veröffentlichungstag der Anmeldung: 25.07.2012
(73) Patentinhaber: WILO SE, 44263 Dortmund (DE)
(72) Erfinder: Strelow, Günter, 44801 Bochum (DE); Materne, Thomas, 59348 Lüdinghausen (DE)
(74) Vertreter: Cohausz Hannig Borkowski Wißgott

(56) Entgegenhaltungen:
- EP-B1- 2 059 991
- US-A1- 2004 051 417
- US-A1- 2006 071 569

## Beschreibung

Die Erfindung betrifft ein Verfahren zum Fertigen eines Stators eines Elektromotors gemäß dem Oberbegriff des Anspruchs 1, wobei der Stator Polstege aufweist, auf denen Wicklungsträger sitzen und die Polstege als Teil des äußeren metallenen Rückschlussrings mit diesem formschlüssig verbunden sind.

Es sind die unterschiedlichsten Verfahren zum Herstellen eines Stators bekannt. So ist es beispielsweise aus dem europäischen Patent 2 059 991 B1 bekannt, Wicklungsträger über Scharniere am Rand eines Trägerelements anzulenken und nach dem Bewickeln in die endgültige Stellung umzuklappen. Danach wird der Rückschlussring auf die fertigen Wicklungsträger aufgeschoben, so dass ein weiterer Arbeitsschritt erforderlich ist. Die US-Patentanmeldung US 2006/071569 A1 schlägt vor, alle Statorsegmente einzeln, d.h. unabhängig von den übrigen Statorsegmenten zu bewickeln, so dass jede Wicklung eines Statorsegments zwei elektrische Anschlüsse aufweist. Die Statorsegmente werden anschließend zu einer Statoranordnung zusammengesetzt, so dass die Anschlüsse axial aus dem Stator vorstehen. Diese müssen anschließend elektrisch verschaltet werden, was den Herstellungsaufwand erhöht.

Aufgabe der Erfindung ist es, die automatische Herstellung und Montage eines Stators einer elektrischen Maschine zu vereinfachen, die Fehlerhäufigkeit zu verringern und hierbei unterschiedlichste Baugrößen fertigen zu können.

Diese Aufgabe wird erfindungsgemäß dadurch gelöst, dass der Stator in einzelne Statorsegmente aufgeteilt wird, die jeweils einen Polsteg mit einem Wicklungsträger und ein mit dem Polsteg verbundenes Rückschlussringsegment aufweisen, und dass ein Wicklungsträger bewickelt wird, während er mit seinem Statorsegment vom übrigen Stator getrennt angeordnet ist. Gemäß einer ersten Ausführungsvariante wird zum Bewickeln das Statorsegment radial aus dem Stator bewegt und in einem Abstand zum Stator gehalten, und nach dem Bewickeln das Statorsegment in den Stator zurückbewegt.

Eine solche Segmentierung des Stators führt zur Reduzierung des Statorverschnittes und reduziert damit die Herstellungskosten. Die hohe Stabilität der Wicklungsträger beim Bewickeln ermöglicht eine Maximierung des Füllgrades durch einen maximalen Drahtzug. Eine Vollautomatisierung wird ermöglicht und das Konzept kann auf kleine wie auf große Statoren angewendet werden. Zusätzlich wird das Bewickeln der Spulen mittels eines Flyers ermöglicht, so dass hohe Wickelbeständigkeiten erreicht werden können.

Vorteilhafte Ausgestaltungen der Erfindungen sind in den Unteransprüchen aufgeführt.

Gemäß einer zweiten Ausführungsvariante werden die Statorsegmente vor ihrem Bewickeln zu einer Segmentkette aufgestellt und es wird nacheinander mindestens ein Statorsegment aus der Segmentkette entnommen, bewickelt und nach dem Bewickeln sofort oder nach einer Zwischenlagerung in den Stator gesetzt, wobei in der Segmentkette die Statorsegmente miteinander form- oder stoffschlüssig lösbar verbunden sind. Dies führt zu einer Vereinfachung und Beschleunigung des automatischen Herstellungsverfahrens.

Ein weiteres vorteilhaftes, jedoch nicht unter die Erfindung fallendes Verfahren besteht darin, dass der Stator in einzelne Statorsegmente aufgeteilt wird, die jeweils einen Polsteg mit einem Wicklungsträger und ein mit dem Polsteg verbundenes Rückschlussringsegment aufweisen, und dass die Statorsegmente vor ihrem Bewickeln an dem insbesondere aus Kunststoff bestehenden stirnseitigen Anschlussring derart befestigt insbesondere angelenkt werden, dass sie mit ihren Polstegen nach außen weisen, in dieser Stellung bewickelt und danach nach innen umgeklappt werden. Von Vorteil ist auch, wenn die Statorsegmente aufgrund seitlicher Vor- und Rücksprünge formschlüssig ineinander greifen und sich gegenseitig in der Endpositon halten.

Ausführungsbeispiele des erfindungsgemäßen Verfahrens sind in den Zeichnungen 1 bis 5 dargestellt und werden im Folgenden näher beschrieben. Es zeigen
- Figur 1: eine stirnseitige Ansicht des Stators mit fünf befestigten Statorsegmenten und einem abgehobenen Statorsegment,
- Figur 2: einen Stator mit einem Statorsegment im noch abgehobenen Zustand,
- Figur 3: eine Kette von Statorsegmenten,
- Figur 4: einen Stator mit einem befestigten Statorsegment und einem Statorsegment im noch abgehobenen Zustand,
- Figur 5: eine Kette von Statorsegmenten,
- Figur 6: eine perspektivische Ansicht eines nicht erfindungsgemäßen Stators mit angelenkten, nach außen geklappten Statorsegmenten,
- Figur 7: den nicht erfindungsgemäßen Stator mit nach innen geklappten Statorsegmenten.

Der Stator 1 eines Elektromotors weist mehrere Polschuhe auf, die ringförmig angeordnet sind. Jeder Polschuh besitzt ein inneres Jochsegment 2, an dem radial mittig nach außen hin ein Polsteg angeformt ist. Die inneren Jochsegmente 2 aller Polschuhe bilden mit ihrer konkaven Innenfläche 3 den Innenraum 4, in dem der Rotor sich dreht.

Die Polschuhe bilden damit einen sternförmigen Polschuhring mit den radial nach außen weisenden Polstegen. Auf jedem Polsteg ist ein Kunststoff-Wicklungsträger 5 gelagert, der mit einem isolierten Draht bewickelt ist, der die Wicklung bildet.

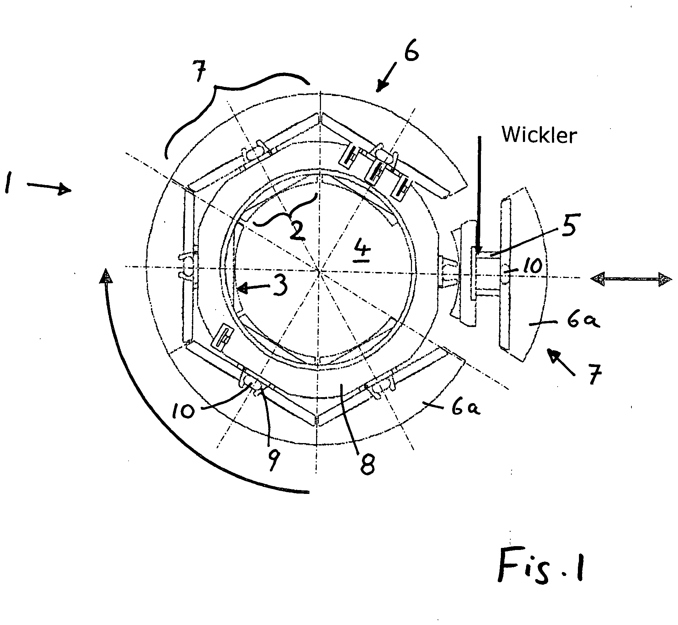

Der Polschuhring ist von einem Rückschlussring 6 umgeben, der, wie auch die Polschuhe, aus übereinander angeordneten Blechen zusammengesetzt ist. Der gesamte Stator 1 ist in einzelne, sektorförmige Segmente aufgeteilt, wobei jedes Statorsegment 7 einen Polsteg mit Jochsegment, einen Wicklungsträger mit Wicklung und ein äußeres Rückschlussringsegment 6a aufweisen. In dem in Figur 1 dargestellten Ausführungsbeispiel ist damit der Stator 1 in sechs gleich große Statorsegmente aufgeteilt, die sich jeweils über 60° erstrecken. Somit ist der Rückflussring 6 nicht ein zusammenhängender Ring, sondern besteht aus sechs einzelnen Rückschlussringsegmenten 6a (bzw. Rückschlussringsektoren).

In gleicher Weise ist der gesamte Stator 1 aus sechs einzelnen, sektorförmigen Statorsegmenten 7 zusammengesetzt, so dass jedes einzelne Statorsegment 7 radial herausgenommen und in diesem, vom Stator getrennten Zustand bewickelt werden kann. Nach dem Bewickeln wird dann das Statorsegment in den Stator radial zurückgeschoben.

Im eingeschobenen Zustand wird jedes Statorsegment 7 am kopfseitigen Anschlussring 8 rastend gehalten. Hierzu weist der aus Kunststoff bestehende koaxiale Anschlussring 8 eine außenseitig angeformte Kunststoffklammer 9 auf, in die ein am Wicklungsträger vorstehender Vorsprung 10 einrastet.

Statt einer rastenden Halterung werden die einzelnen Statorsegmente 7 alternativ in der Endposition durch die Fertigungseinrichtung solange gehalten, bis der Stator über das anschließende Einpressen in das Motorgehäuse oder durch Umspritzen mit Kunststoff seine endgültige Form beibehält.

Zum Bewickeln der Wicklungsträger 5 werden somit die Statorsegmente 7 einschließlich des Rückschlussringsegmentes 6a von dem Stator 1 getrennt und in der getrennten Stellung bewickelt und danach wieder eingesetzt. Stattdessen können aber auch die Statorsegmente 7 nicht erst unbewickelt zum Stator zusammengesetzt werden, sondern sie werden erst einer nach dem anderen bewickelt und nach dem Bewickeln nacheinander zum Stator zusammengesetzt.

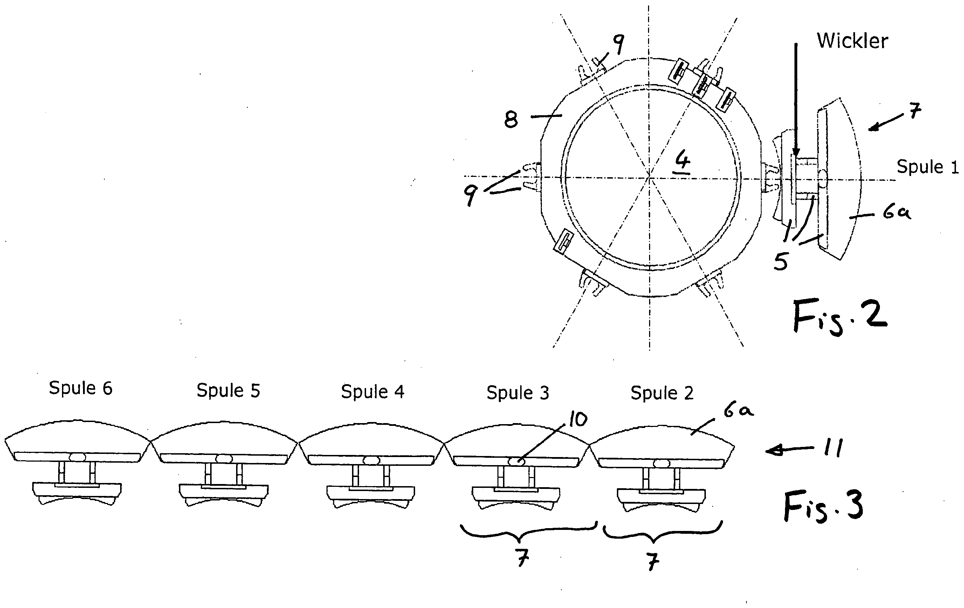

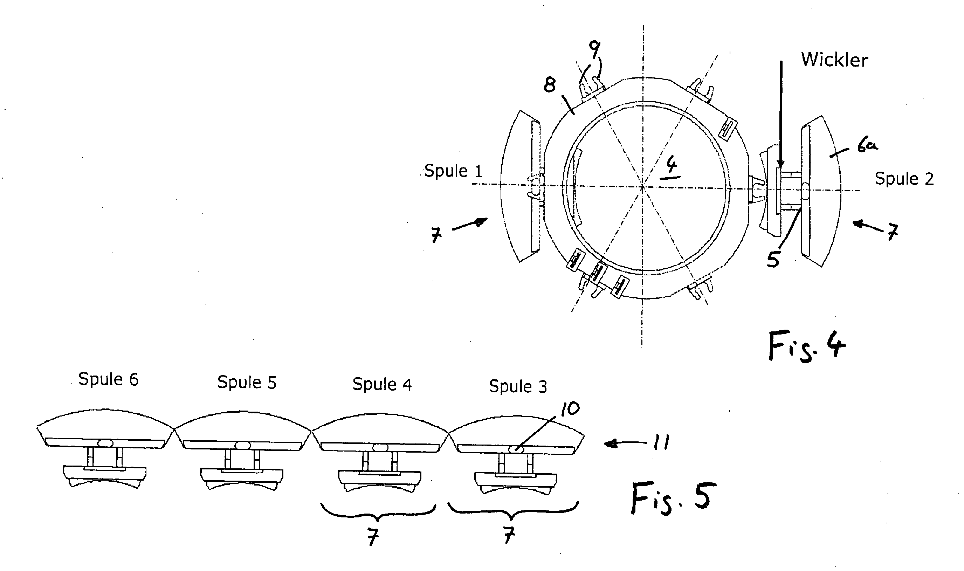

Ein solches Verfahren ist in den Figuren 2 bis 5 dargestellt, wobei als eine weitere Alternative die einzelnen Statorsegmente im unbewickelten Zustand zu einer Segmentkette 11 zusammengestellt werden. Hierbei wird ein Statorsegment nach dem anderen aus der Segmentkette entnommen, bewickelt und nach dem Bewickeln sofort oder nach einer Zwischenlagerung in den Stator gesetzt. Hierbei wird bei einer automatischen Fertigung der Stator bzw. der Anschlussring nach dem Aufsetzen eines Statorsegmentes 7 jeweils gedreht, um eine Stelle freizugeben, auf der das nächste Statorsegment gesetzt wird.

Die Statorsegmente 7 insbesondere deren Rückschlussringsegmente und/oder deren Wicklungsträger 5 weisen seitlich ineinander greifende Vor- und Rücksprünge auf, die zahnartig formschlüssig ineinander greifen und damit aufgrund dieser Geometrie sich gegenseitig in der Endposition halten.

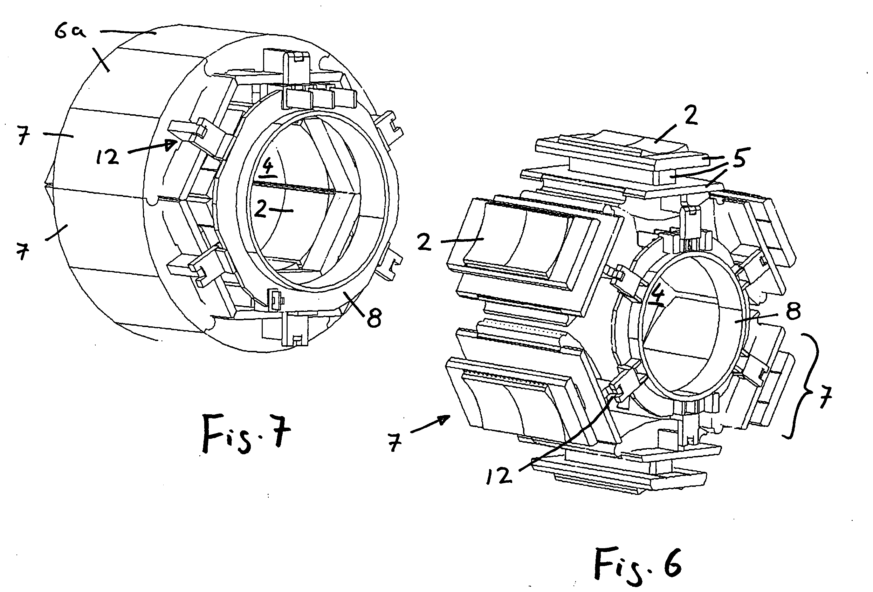

Das in den Figuren 6 und 7 dargestellte Verfahren ist nicht erfindungsgemäß und unterscheidet sich von den vorherigen dadurch, dass die Statorsegmente in einer um 180° gedrehten Stellung am Anschlussring 8 befestigt werden, so dass nach dem Aufsetzen aller Statorsegmente deren Jochsegmente 2 nach außen weisen. Hierbei besteht die Befestigung des Statorsegments am Anschlussring aus einem Gelenk 12, wobei die beiden Gelenkteile am Anschlussring und am Statorsegment vorspringend gebildet sind und ineinander rasten und dann so sicher rastend gehalten sind, dass sie das Gelenk bilden.

In dieser in Figur 6 dargestellten Situation mit nach außen gerichteten Statorsegmenten 7 können in dieser Stellung die Statorsegmente bzw. Wicklungsträger 5 bewickelt werden. Nachdem alle Wicklungen erzeugt wurden, werden die Statorsegmente 7 um das Gelenk 5 um 180 Grad nach innen geschwenkt und bilden damit den fertigen Stator wie er in Figur 7 dargestellt ist.

## Patentansprüche

1. Verfahren zum Fertigen eines Stators (1) eines Elektromotors, wobei der Stator Polstege aufweist, auf denen Wicklungsträger (5) sitzen und die Polstege als Teil eines äußeren metallenen Rückschlussrings (6) mit diesem formschlüssig verbunden sind, und der Stator (1) in einzelne Statorsegmente (7) aufgeteilt wird, die jeweils einen Polsteg mit einem Wicklungsträger (5) und ein mit dem Polsteg verbundenes Rückschlussringsegment (6a) aufweisen, und wobei ein Wicklungsträger (5) bewickelt wird, während er mit seinem Statorsegment (7) vom übrigen Stator (1) getrennt angeordnet ist, **dadurch gekennzeichnet,**
- **dass** zum Bewickeln das Statorsegment (7) radial aus dem Stator (1) bewegt und in einem Abstand zum Stator (1) gehalten wird und dass nach dem Bewickeln das Statorsegment (7) in den Stator (1) zurück bewegt wird, oder
- **dass** die Statorsegmente (7) vor ihrem Bewickeln zu einer Segmentkette (11) aufgestellt werden, und nacheinander mindestens ein Statorsegment (7) aus der Segmentkette (11) entnommen, bewickelt und nach dem Bewickeln sofort oder nach einer Zwischenlagerung in den Stator (1) gesetzt wird, wobei in der Segmentkette (11) die Statorsegmente (7) miteinander form- oder stoffschlüssig lösbar verbunden sind.

2. Verfahren nach Anspruch 1, **dadurch gekennzeichnet, dass** das Statorsegment (7) über eine Rastverbindung (9) an dem stirnseitigen Anschlussring (8) des Stators (1) befestigt ist.

3. Verfahren nach einem der vorherigen Ansprüche, **dadurch gekennzeichnet, dass** jedes Statorsegment (7) im vom Stator (1) radial abgehobenen Zustand in einer Bewicklungsstation bewickelt und danach radial an den Stator (1) in seine endgültige Statorstellung bewegt wird.

4. Verfahren nach Anspruch 3, **dadurch gekennzeichnet, dass** nach dem Anbringen eines bewickelten Statorsegments (7) der Stator (1) soweit um seine Achse verdreht wird, dass das nächste Statorsegment (7) in die Bewicklungsstation radial zum Stator (1) gebracht, bewickelt und danach in den Stator gesetzt wird.

5. Verfahren nach einem der vorherigen Ansprüche **dadurch gekennzeichnet, dass** die bewickelten Statorsegmente (7), nachdem sie in ihre endgültige Statorposition gebracht wurden, in dieser Position durch die Fertigungseinrichtung gehalten werden und danach durch die anschließende Montage insbesondere durch das Einpressen in das Motorengehäuse oder durch Umspritzen mit Kunststoff ihre endgültige Stellung beibehalten.

## Claims

1. Method for manufacturing a stator (1) of an electric motor, the stator having pole webs on which winding carriers (5) are seated and the pole webs being as part of an outer metal yoke (6) being positively connected to the latter, and the stator (1) being divided into individual stator segments (7), each of which having a pole web with a winding carrier (5) and a yoke segment (6a) connected to the pole web, and wherein a winding carrier (5) is wound, while it is with its stator segment (7) arranged separately from the rest of the stator (1), **characterized**
- **in that**, for winding, the stator segment (7) is moved radially out of the stator (1) and held at a distance to the stator (1), and in that, after winding, the stator segment (7) is moved back into the stator (1), or
- **in that** the stator segments (7), before they are wound, are set up to form a segment chain (11), and successively at least one stator segment (7) is removed from the segment chain (11), wound and, after winding, is immediately or after intermediate storage, placed in the stator (1), wherein in the segment chain (11) the stator segments (7) being releasably connected to one another in a positive or material-bonding manner.

2. Method according to claim 1, **characterized in that** the stator segment (7) is fastened to the frontal connector ring (8) of the stator (1) via a latching connection (9).

3. Method according to one of the previous claims, **characterized in that** each stator segment (7), in its state radially removed from the stator, is wound in a winding station, and is then moved radially to the stator (1) in its final stator position.

4. Method according to claim 3, **characterized in that,** after the attachment of a wound stator segment (7), the stator (1) is rotated about its axis to such an extent that the next stator segment (7) is brought into the winding station radially to the stator (1), wound and is then placed in the stator.

5. Method according to one of the previous claims, **characterized in that** the wound stator segments (7), after having been brought into their final stator position, are held in this position by the manufacturing device and after that, maintain their final position by means of the subsequent assembly, in particular by pressing them into the motor housing or by injection moulding with plastic material.

## Revendications

1. Procédé de fabrication d'un stator (1) d'un moteur électrique, le stator ayant des pièces polaires sur lesquelles des supports d'enroulement (5) sont placés et les pièces polaires étant en tant que partie d'une culasse (6) métallique extérieure reliée positivement à celle-ci, et le stator (1) étant divisé en segments (7) individuels, dont chacune comporte une pièce polaire avec un support d'enroulement (5) et un segment (6a) de culasse relié à la pièce polaire, et dans laquelle un support d'enroulement (5) est enroulé, tandis qu'il est, avec son segment (7) de stator, disposé séparément du reste du stator (1), **caractérisé**
- **en ce que**, pour l'enroulement, le segment (7) de stator est déplacé radialement hors du stator (1) et maintenu à distance du stator (1), et en ce que, après l'enroulement, le segment (7) de stator est remis dans le stator (1), ou
- **en ce que** les segments (7) de stator, avant d'être enroulés, sont mis en place pour former une chaîne (11) de segments, et successivement au moins un segment (7) de stator est retiré de la chaîne (11) de segments, enroulé et, après enroulement, est placé immédiatement ou après stockage intermédiaire dans le stator (1), les segments (7) de stator étant reliés entre eux de manière amovible dans la chaîne (11) de segments par liaison positive ou matière.

2. Procédé selon la revendication 1, **caractérisé en ce que** le segment de stator (7) est fixé à la bague de raccordement (8) frontale du stator (1) par l'intermédiaire d'une liaison à verrouillage (9).

3. Procédé selon l'une des revendications précédentes, **caractérisé en ce que** chaque segment (7) de stator, dans son état retiré radialement du stator, est enroulé dans une station d'enroulement, et est ensuite déplacé radialement vers le stator (1) dans sa position finale.

4. Procédé selon la revendication 3, **caractérisé en ce que,** après la fixation d'un segment (7) de stator enroulé, on fait tourner le stator (1) autour de son axe de telle sorte que le segment (7) de stator suivant est amené radialement au stator (1) dans la station d'enroulement, enroulé et est ensuite placé dans le stator.

5. Procédé selon l'une des revendications précédentes, **caractérisé en ce que** les segments (7) de stator enroulé, après avoir été amenés dans leur position statorique finale, sont maintenus dans cette position par le dispositif de fabrication et maintiennent ensuite leur position finale au moyen de l'assemblage suivant, en particulier en les pressant dans le carter moteur ou par injection de matière plastique.
